# EUROPEAN PATENT APPLICATION

(11) **EP 4 603 965 A1**
(43) Date of publication of application: **20.08.2025**
(21) Application number: 23877182.8
(22) Date of filing: 02.10.2023
(51) Int. Cl.: G06F 8/65, G05B 9/03, G06F 11/20

(54) **CONTROL SYSTEM AND CONTROL DEVICE**

(30) Priority: 11.10.2022 JP 2022163525
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: HIRANO Tatsuma, Kawasaki-shi, Kanagawa 212-0013 (JP); OHNISHI Naoya, Kawasaki-shi, Kanagawa 212-0013 (JP); NAKATANI Hiroshi, Kawasaki-shi, Kanagawa 212-0013 (JP); MATSUYAMA Hiroki, Kawasaki-shi, Kanagawa 212-0013 (JP)
(74) Representative: AWA Sweden AB
(86) International application number: PCT/JP2023/035849
(87) International publication number: WO 2024/080177

(57) **Abstract**

According to the present embodiment, a control device comprises a first processor, a switching manager, and a second processor. The first processor is configured to execute control of a next control period on basis of control information having been changed during a current control period. The switching manager is configured to transmit to the first processor a switching notification for instructing switching to the first processor. The second processor is configured to use second software different from first software to be capable of executing control of a device by repeating a predetermined control period. The second processor uses at least the changed control information before a switching completion time as a time point where a currently processing control period ends to start control of the device in a next control period when control of the device in the next control period is executable.

## Description

### Field

The embodiments of the present invention relate to a control system and a control device.

### Background

When software used for industrial equipment and the like is updated, it is a normal procedure to stop processing in the equipment in order to update the software. Therefore, there occurs a downtime at the time of updating the software. Accordingly, there is a need to stop operation of industrial equipment and the like at the time of updating software.

### Citation List

### Patent Literature

Patent Literature 1: Japanese Patent Application Laid-open No. H8-137815

### Summary

### Technical Problem

In order to solve such a problem, an object of the present embodiment is to provide a control system and a control device in which software can be updated without stopping operation of a device controlled by the software.

### Solution to Problem

According to the present embodiment, a control device comprises a first processor, a switching manager, and a second processor. The first processor is configured to use first software to execute control of a device by repeating a predetermined control period and to execute control of a next control period on basis of control information having been changed during a current control period. The switching manager is configured to transmit to the first processor a switching notification for instructing switching to the first processor. The second processor is configured to use second software different from the first software to be capable of executing control of a device by repeating a predetermined control period. The second processor uses at least the changed control information before a switching completion time as a time point where a currently processing control period ends to start control of the device in a next control period when control of the device in the next control period is executable.

### Effect of the Invention

Software can be updated without stopping operation of a device and the like.

### Brief Description of Drawings

[FIG. 1] FIG. 1 is a block diagram illustrating a configuration example of a control device according to the present embodiment.
[FIG. 2] FIG. 2 is a diagram illustrating an example of a control period of a first processor.
[FIG. 3] FIG. 3 is a diagram illustrating an example of a message sequence chart when a second processor starts control processing.
[FIG. 4] FIG. 4 is a diagram illustrating an example of a message sequence chart when the second processor does not start control processing.
[FIG. 5] FIG. 5 is a diagram illustrating an example of a message sequence chart according to a first modification of a first embodiment.
[FIG. 6] FIG. 6 is a diagram of an example of a message sequence chart when hand-over has not been made on time.
[FIG. 7] FIG. 7 is a block diagram illustrating a configuration example of a control device according to a second embodiment.
[FIG. 8] FIG. 8 is a block diagram illustrating a configuration example of a control system according to a third embodiment.
[FIG. 9] FIG. 9 is a diagram illustrating an example of a message sequence chart according to the third embodiment.

### Description of Embodiments

A control system and a control device according to embodiments of the present invention will now be explained below with reference to the drawings. The following embodiments are merely examples of the embodiments of the present invention and are not intended to limit the scope of the present invention. In the drawings referred to in the embodiments, same parts or parts having identical functions are denoted by like or similar reference characters and there is a case where redundant explanations thereof are omitted. Further, for convenience of explanation, there are cases where dimensional ratios in the drawings are different from those of actual products and some part of configurations is omitted from the drawings.

### (First embodiment)

### (Configuration)

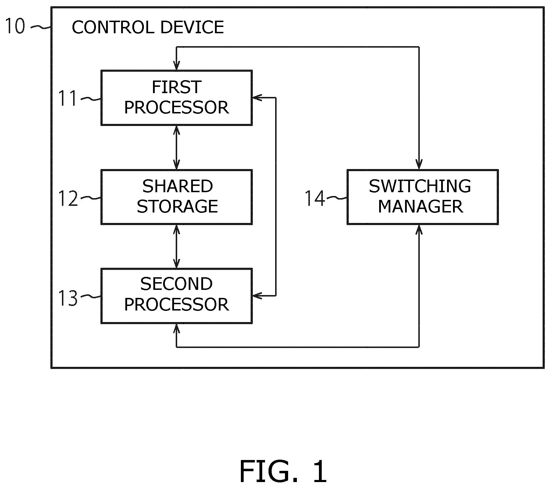

FIG. 1 is a block diagram illustrating a configuration example of a control device 10 according to the present embodiment. As illustrated in FIG. 1, the control device 10 includes a first processor 11, a shared storage 12, a second processor 13, and a switching manager 14. For example, the control device 10 is configured to include a multi-core processor and, for example, controls industrial equipment and the like. Further, for example, the control device 10 can be constituted as a host of a virtual machine or a host that operates containers.

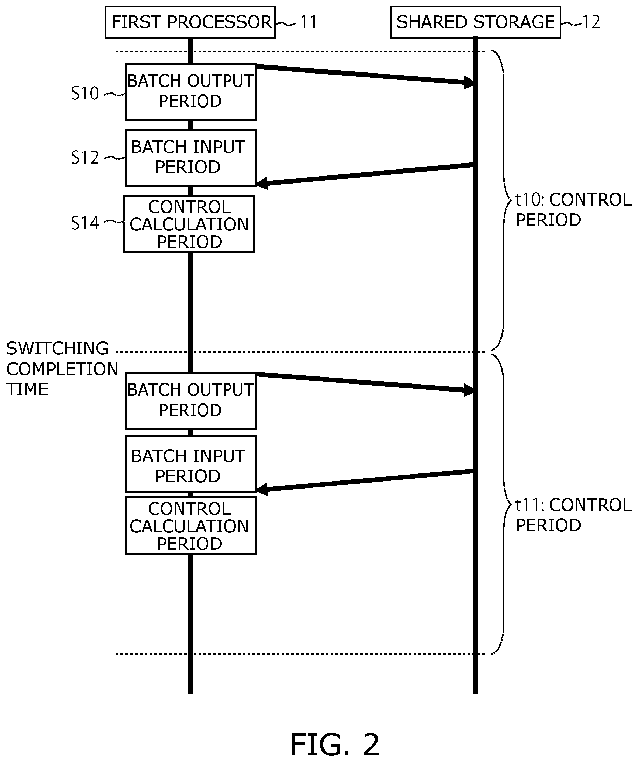

The first processor 11 uses, for example, first software to execute control of a device by repeating a predetermined control period. This first processor 11 controls driving of an actuator and the like according to, for example, an input signal from a sensor and the like. The first processor 11 stores, for example, control information that changes with lapse of time such as a position, angle, and the like of a controlling target, an internal parameter used by the first processor 11, memory information as information for memory allocation to the shared storage 12, and the like in the shared storage 12. A detailed example of the control period is described later with reference to FIG. 2. The software according to the present embodiment is an element constituting the control device 10 and represents a collective term of all the elements excluding programs or hardware as a physical element.

The shared storage 12 is a storage that both the first processor 11 and the second processor 13 can read from and write into. The shared storage 12 may include a RAM (Random Access Memory) of various types or include a storage medium such as an HDD (Hard Disk Drive) or an SSD (Solid State Drive).

Similarly to the first processor 11, the second processor 13 can control industrial equipment and the like repeatedly according to a control period. That is, by using second software that is different from the first software, the second processor 13 can execute control of industrial equipment by repeating a predetermined control period. For example, the second software is software obtained by updating the first software. In the present embodiment, the second processor 13 is described on the assumption that, for example, it is a side where update of controller software is ended and control processing by the first processor 11 is handed over.

The switching manager 14 manages switching of control between the first processor 11 and the second processor 13. While management of switching control from the first processor 11 to the second processor 13 is described in the present embodiment, the management is not limited thereto. For example, it is possible to switch control from the second processor 13 to the first processor 11 after updating controller software of the first processor 11.

In the present embodiment, the control device 10 includes a clock. Accordingly, the first processor 11, the second processor 13, and the switching manager 14 also share clock information.

FIG. 2 is a diagram illustrating an example of a control period of the first processor 11. For example, at a batch output period S10, the first processor 11 outputs a control signal to a controlling target and stores, for example, control information such as a position, angle, and the like of the controlling target required for control in the next control period in the shared storage 12.

Next, at a batch input period S12, the first processor 11 inputs an external signal such as an input signal from a sensor and the like from the shared storage 12. Subsequently, at a control calculation period S14, the first processor 11 calculates a control quantity with respect to the controlling target, for example. Control of the controlling target is repeated in a control period t10 including the batch output period S10, the batch input period S12, the control calculation period S14, and margins such as a communication time. The second processor 13 also performs, after starting control, control processing in a control period equivalent to that of the first processor 11.

As illustrated in FIG. 2, control information including positional information and the like of the controlling target changes in each control period t10 and control period t11. Therefore, in order to switch control processing from the first processor 11 to the second processor 13, it is necessary to hand over control information required for control, control parameters that change according to the state of the controlling target, and the like to the second processor 13. For example, if this hand-over processing is not ended in the control period t10, the second processor 13 cannot execute control in the control period t11 continuously. That is, when the start of the control period t11 is delayed due to a delay of the hand-over processing, troubles in control of the controlling target occur.

Therefore, when the hand-over processing ends within a control period, the processing of the first processor 11 is handed over to the second processor 13 and the second processor 13 starts control processing. Here, hand-over of processing according to the present embodiment represents, for example, the second processor 13 being able to use setting of an internal parameter the first processor 11 uses to execute control, memory information as information for allocating a memory to the shared storage 12, and control information. That is, the second processor 13 uses at least control information having been changed before a switching completion time as a time point where the currently processing control period t10 ends to start control of a device in the next control period t11 when control of the device in the next control period t11 is executable.

Meanwhile, when reflection of setting of an internal parameter, memory information as information for allocating a memory to the shared storage 12, and control information is not completed within the switching completion time, the second processor 13 does not start periodic processing. That is, when hand-over processing is not ended within a control period, the second processor 13 does not start control processing and the first processor 11 continues the control processing.

### (Operation)

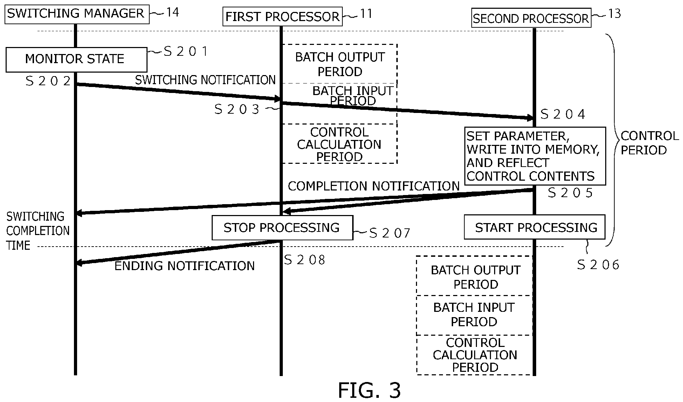

FIG. 3 is a diagram illustrating an example of a message sequence chart when the second processor 13 starts control processing. As illustrated in FIG. 3, first, the switching manager 14 monitors an input state of a switching instruction signal and the like from an external device (S201). Upon detection of the switching instruction signal, the switching manager 14 transmits a switching notification to the first processor (S202). The switching manager 14 may transmit a switching notification upon determination of a control state and the like of the first processor 11. Further, the state of the first processor 11 or the second processor 13 may be notified via a human-machine interface (HMI) (not illustrated) of the switching manager 14.

Upon reception of the switching notification from the switching manager 14, the first processor 11 calculates a switching completion time as a time point where a control period ends. For example, as parameters of controller software, time periods such as the control periods t10 and t11 are set in advance. Accordingly, the first processor 11 can calculate a switching completion time from a time point where a switching signal is input from the switching manager 14 to a time point where the control periods t10, t11, and the like end. Subsequently, the first processor 11 outputs a switching notification signal to the second processor 13 (S203).

This switching notification signal includes information such as a switching completion time, control information, an internal parameter of the first processor 11, memory information of the shared storage 14, and control contents. At this time, the switching notification may include a processor identifier for indicating from which and to which processor switching of control is made. Further, the switching notification may include an identifier indicating that switching is made from the first processor 11 to the second processor 13. Furthermore, when a switching notification is transmitted, the switching manager 14 may transmit the switching notification after a transmission permission is input by a human via a human-machine interface (HMI) (not illustrated) of the switching manager 14.

Next, the second processor 13 having received the switching notification from the first processor 11 prepares for being capable of performing cyclic control calculation (S204). Here, while setting of parameters included in the switching notification, allocation of a memory based on memory information, setting the subsequent control contents in an outputter can be mentioned as the preparation, the preparation is not limited thereto.

When all the preparation is done before the switching completion time, the second processor 13 transmits a completion notification to the switching manager 14 and the first processor 11 (S205). Subsequently, the second processor 13 starts control from the next control period (S206).

Next, upon reception of the completion notification from the second processor 14 before the switching completion time, the first processor 11 stops the control processing (S207). Subsequently, the first processor 11 transmits an ending notification to the switching manager 11 (S208). Thereafter, the switching manager 14 receives the completion notification from the second processor and the ending notification from the first processor 11 (S207). In this manner, by including a switching completion time, parameters required for control calculation, and the like in a switching notification and notifying the switching completion time, even a control system that performs periodic processing can switch its processors.

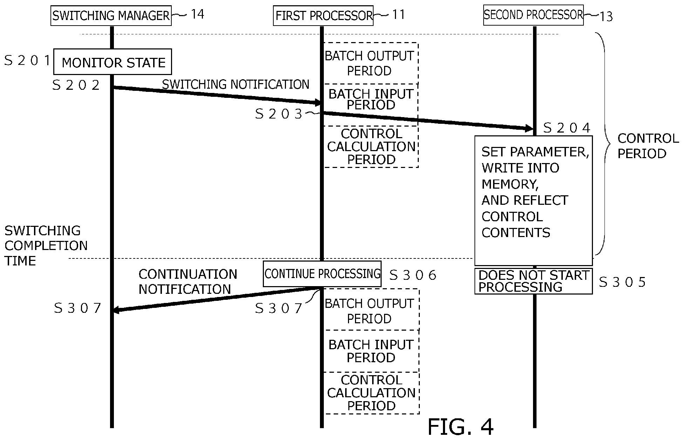

FIG. 4 is a diagram illustrating an example of a message sequence chart when the second processor 13 does not start control processing. As illustrated in FIG. 4, processes from S201 to S204 are performed similarly to FIG. 3. Subsequently, when all the preparation is not done before a switching completion time, the second processor 13 does not transmit any completion notification and does not start periodic processing calculation (S305).

Next, since the first processor 11 has not received any completion notification from the second processor 14 within the switching completion time, the first processor 11 continues the processing calculation and transmits a continuation notification to the switching manager 14 (S306). Finally, the switching manager 14 receives the continuation communication from the first processor 11 and transmits the continuation notification to the second processor 13 (S307).

As described above, since a switching completion time is shared between the first processor 11 and the second processor 14, when there is no switching completion notification, the first processor 11 can continue control processing. With this configuration, it is possible to prevent occurrence of a delay (a downtime) and the like in control processing of a controlling target. When switching has failed, the switching manager 14 can notify a switching notification to the first processor 11 until the switching becomes successful. As reasons for switching not being completed before the switching completion time, unusual events such as a delay of timing in the control state of the first processor 11 and a delay of input from an external sensor are conceived. Accordingly, by repeating switching processing several times, switching within the switching completion time can be made.

As described above, according to the present embodiment, the end of a control period during switching processing is set to be a switching completion time and the switching completion time is shared between the first processor 11 and the second processor 14. With this configuration, when setting processing ends before the switching completion time, the second processor 14 starts control processing and the first processor 11 becomes capable of stopping the control processing. Accordingly, the control period of the second processor 14 can be started continuously with respect to the control period of the first processor 11.

On the other hand, when setting processing does not end before the switching completion time, the second processor 14 does not start control processing, so that occurrence of a delay (a downtime) and the like in control processing of a controlling target is prevented. In this case, since there is no switching completion notification from the second processor 14, the first processor 11 can continue the control processing. With this configuration, occurrence of a delay (a downtime) and the like in control processing of a controlling target is prevented.

### (First modification of first embodiment)

The control device 10 according to a first modification of the first embodiment is different from the control device 10 according to the first embodiment in a feature that the switching manager 14 manages the start and end of switching processors. Differences from the control device 10 according to the first embodiment are described below.

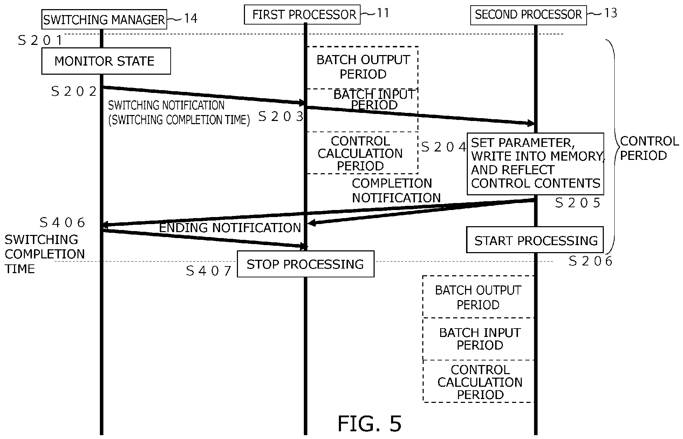

FIG. 5 is a diagram illustrating an example of a message sequence chart according to the first modification of the first embodiment. As illustrated in FIG. 5, first, the switching manager 14 monitors an input state of a switching instruction signal and the like from an external device, the state of the first processor 11, and the state of the second processor 13. Upon detection of the switching instruction signal, the switching manager 14 transmits a switching notification to the first processor (S202). In this case, the switching manager 14 transmits, in synchronization with a timing where the control period of the first processor 11 ends, a switching notification including a switching completion time (S202). The control period according to the present embodiment is substantially constant and the switching manager 14 can calculate the switching completion time. Subsequently, the first processor 11 outputs a switching notification signal to the second processor 13 (S203). This switching notification signal includes information such as a received switching completion time, control information, an internal parameter of the first processor 11, memory information of the shared storage 14, and control contents.

Processes similar to those of the first embodiment are performed from S204 to S206. Subsequently, the switching manager 14 having received a completion notification before a switching completion time from the second processor 13 as a switching counterpart transmits an ending notification to the first processor 11 as a switching source (S406).

Next, the first processor 11 having received the completion notification from the second processor 13 as a switching counterpart and the ending notification from the switching manager 14 before the switching completion time stops periodic processing (S407).

In this manner, the first processor 11 is configured to stop control processing based on the ending notification from the switching manager 14 in response to the completion notification from the second processor 13. Accordingly, the switching manager 14 can prevent occurrence of a downtime at the time of update while uniformly managing switching processing.

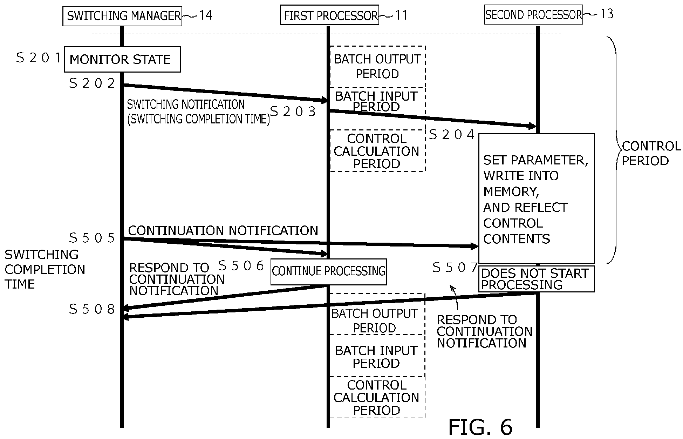

FIG. 6 is a diagram illustrating an example of a message sequence chart when hand-over has not been made on time. As illustrated in FIG. 6, processes from S201 to S206 are performed similarly to FIG. 5. Subsequently, when the switching processor 14 does not receive any switching completion notification before a predetermined elapsed time, the switching processor 14 determines that it does not receive any switching completion notification before a switching completion time and transmits a continuation notification to the first processor 11 and the second processor 13 (S505).

As criteria for the switching processor 14 to determine that it does not receive any switching completion notification before a switching completion time, there is conceived, for example, a time obtained by subtracting a predetermined time as a margin from a switching completion time, a time obtained by subtracting a process delay time for processing required at the time of completing switching from a switching completion time, or a time obtained by further subtracting a predetermined time as a margin from a time obtained by subtracting a process delay time for processing required at the time of completing switching from a switching completion time. In this manner, when the switching processor 14 transmits a continuation notification, while setting a switching completion time as the reference, it is possible to give a time space to the timing where the continuation notification is output.

Next, the first processor 11 having received a continuation notification from the switching manager 14 continues periodic processing. Subsequently, the first processor 11 responds to the switching manager 14 with respect to the continuation notification (S506). At this time, the first processor 11 complies with the continuation notification from the switching manager 14 regardless of a switching completion time.

Next, the second processor 13 having received the continuation notification from the switching manager 14 does not start switching processing and periodic processing. The second processor 13 then responds to the switching manager 14 with respect to the continuation notification (S507). At this time, the second processor 13 complies with the continuation notification from the switching manager 14 regardless of a switching completion time.

Finally, since there is a response to the continuation notification from the first processor 11 and the second processor 13, the switching manager 14 does not make switching of periodic processing from the first processor 11 to the second processor 13 and determines that the first processor 11 continues the periodic processing (S508). For example, when the switching manager 14 does not receive any response to the continuation notification from the first processor 11 and the second processor 13, the switching manager 14 may determine that the first processor 11 and the second processor 13 have not received the continuation notification normally and transmit the continuation notification once again.

In this manner, when the switching manager 14 transmits a continuation notification, in addition to the effects equivalent to those of the control device according to the first embodiment, it is possible to give a time space to the timing where a continuation notification or a stop notification is output while setting a switching completion time as the reference.

### (Second embodiment)

### (Configuration)

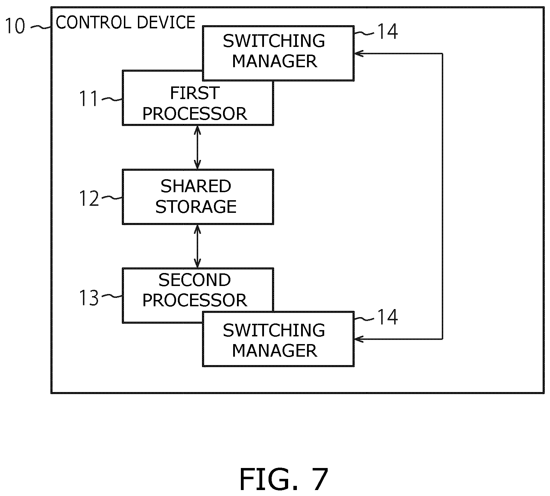

FIG. 7 is a block diagram illustrating a configuration example of a control device 10a according to a second embodiment. As illustrated in FIG. 7, the control device 10a is different from the control device 10 according to the first embodiment in a feature that each of the first processor 11 and the second processor 13 includes a respective one of switching managers 14, 14 as an internal function thereof.

In this manner, since the switching managers 14, 14 are respectively present in the first processor 11 and the second processor 13, each notification necessary for switching processors can be transmitted and received without any delay as compared to the first embodiment, so that occurrence of failure in switching processing can be prevented.

### (Third embodiment)

### (Configuration)

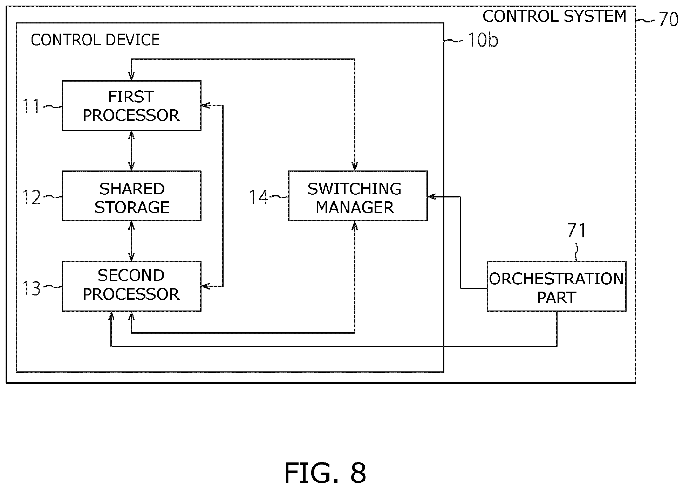

FIG. 8 is a block diagram illustrating a configuration example of a control system 70 according to a third embodiment. As illustrated in FIG. 8, the control system 70 includes a control device 10b and an orchestration part 71 according to the third embodiment. Each constituent part of the control device 10b according to the third embodiment is constituted with a container on a cloud server, for example.

The orchestration part 71 can deploy the first processor 11, the second processor 13, and the switching manager 14 of the control device 10b. The deployment according to the present embodiment represents setting application software presented via a network and the like executable. Further, the deployment according to the present embodiment may include installation of software.

For example, during a period where the first processor 11 keeps controlling, the orchestration part 71 constitutes the second processor 13 and the switching manager 14 according to the present embodiment by deployment. That is, the second processor 13 and the switching manager 14 are containers or applications that start to operate as the orchestration part 71 causes them to undergo so-called hot deployment.

### (Operation)

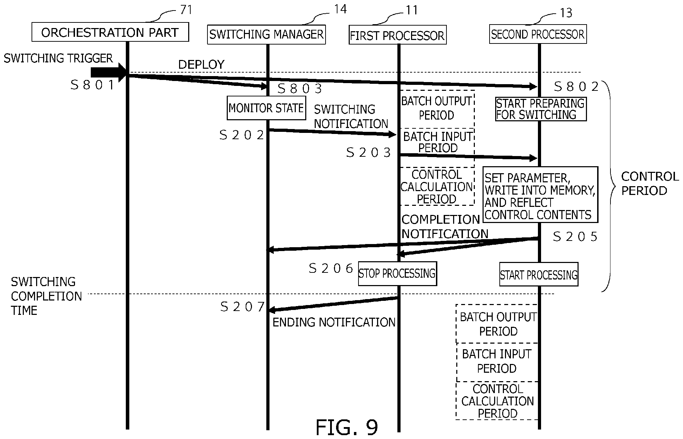

FIG. 9 is a diagram illustrating an example of a message sequence chart according to the third embodiment. As illustrated in FIG. 9, first, the orchestration part 71 deploys the switching manager 14 and the second processor 13 according to a switching trigger of a processor (S801).

Here, the switching trigger is, for example, a trigger given by a person as he pushes a certain button on a screen via an HMI (not illustrated) of the orchestration part 71; however, the switching trigger is not limited thereto. For example, the switching trigger may be a trigger given from outside of the orchestration part 71 via a network and with an IP packet and the like.

Next, the second processor 13 is deployed and automatically enters a state where an instruction for preparing for switching can be received (S802). In the present embodiment, when the second processor 13 is deployed, it enters a state where an instruction for preparing for switching can be automatically received. Alternatively, it is also possible that after the second processor 13 is deployed, an instruction for preparing for switching is separately given from the orchestration part 71 to the second processor 13.

Next, the switching manager 14 is deployed and automatically enters a state where the state of the first processor 11 and the state of the second processor 13 can be monitored (S803). In the present embodiment, while the switching manager 14 automatically enters a state where the state of the first processor 11 and the state of the second processor 13 can be monitored, it is also possible that after the switching manager 14 is deployed, the switching manager 14 separately receives an instruction for monitoring the first processor 11 and the second processor 13 from the orchestration part 71. Further, while it has been described that the switching manager 14 deploys the second processor 13 and the switching manager 14 in this order, the order of deployment is not limited to this one. The flow of processing after this deployment is similar to that of the first embodiment.

As described above, according to the present embodiment, it is configured that the orchestration part 71 deploys the second processor 13 as the processor of a switching counterpart and the switching manager 14. With this configuration, in addition to the effects of the control device according to the first embodiment, even a control system that performs periodic processing on a cloud can update its processors.

While certain embodiments have been described, these embodiments have been presented by way of example only, and are not intended to limit the scope of the inventions. Indeed, the novel devices, methods, and programs described herein may be embodied in a variety of other forms. Furthermore, various omissions, substitutions, and changes in the form of the devices, methods, and programs described in the present specification may be made without departing from the spirit of the inventions.

## Claims

1. A control device comprising:
a first processor configured to use first software to execute control of a device by repeating a predetermined control period and to execute control of a next control period on basis of control information having been changed during a current control period;
a switching manager configured to transmit to the first processor a switching notification for instructing switching to the first processor; and
a second processor configured to use second software different from the first software to be capable of executing control of the device by repeating the predetermined control period, wherein
the second processor uses at least the changed control information before a switching completion time as a time point where a currently processing control period ends to start control of the device in a next control period when control of the device in the next control period is executable.

2. The device of Claim 1, wherein the first processor is configured to notify the switching completion time to the second processor upon reception of the switching notification.

3. The device of Claim 2, further comprising a shared storage configured to be capable of reading from and writing in the first processor and the second processor, wherein
the first processor is configured to transmit the control information, an internal parameter of the first processor, and memory information of the storage to the second processor along with the switching completion time.

4. The device of Claim 3, wherein the second processor is configured not to start control of the device when reflection of setting of the internal parameter, memory information as information for allocating a memory to the shared storage, and the control information is not completed within the switching completion time.

5. The device of Claim 2, wherein the second processor is configured to notify a completion notification when control of the device in a next control period is in an executable state within the switching completion time.

6. The device of Claim 5, wherein the first processor is configured to stop control of the device upon reception of the completion notification.

7. The device of Claim 6, wherein
the second processor is configured to transmit the completion notification to at least the switching manager among the first processor and the switching manager,
the switching manager is configured to transmit an ending notification for instructing ending of periodic processing to the first processor upon reception of the completion notification, and
the first processor is configured to stop periodic processing upon reception of the ending notification.

8. The device of Claim 1, wherein the switching manager is configured to set the switching completion time in the switching notification and to transmit the switching notification to the first processor, and is configured to transmit a continuation notification for continuing current processing to the first processor and the second processor when the switching manager does not receive a completion notification from the second processor within the switching completion time.

9. The device of Claim 1, wherein the switching manager according to Claim 1 is constituted in the first processor and in the second processor.

10. A control system comprising:
the control device according to Claim 1; and
an orchestration part configured to be capable of deploying the switching manager and the second processor.
